# EUROPÄISCHE PATENTSCHRIFT

(11) **EP 0 869 875 B1**
(45) Veröffentlichungstag und Bekanntmachung des Hinweises auf die Patenterteilung: **29.05.2002**
(21) Anmeldenummer: 96924862.4
(22) Anmeldetag: 03.07.1996
(51) Int. Cl.: B60C 23/06

(54) **ANORDNUNG ZUR REIFENDRUCKÜBERWACHUNG**
TYRE PRESSURE MONITORING DEVICE
DISPOSITIF POUR SURVEILLER LA PRESSION DES PNEUS

(30) Priorität: 01.09.1995 DE 19532331
(43) Veröffentlichungstag der Anmeldung: 14.10.1998
(73) Patentinhaber: Continental Teves AG & Co. oHG, 60488 Frankfurt (DE)
(72) Erfinder: FENNEL, Helmut, D-65812 Bad Soden (DE)
(86) Internationale Anmeldenummer: EP9602909
(87) Internationale Veröffentlichungsnummer: WO9709188

(56) Entgegenhaltungen:
- DE-A- 4 303 583
- DE-A- 4 337 443
- PATENT ABSTRACTS OF JAPAN vol. 008, no. 032 (M-275), 10.Februar 1984 & JP,A,58 188704 (SHIN NIPPON DENKI KK), 4.November 1983,

## Beschreibung

Die Erfindung bezieht sich auf eine Anordnung zur Überwachung des Reifendrucks in den an einem Kraftfahrzeug montierten Rädern durch Messen, Vergleichen und Auswerten der Drehgschwindigkeiten der einzelnen Räder, mit Raddrehzahlsensoren und einer elektronischen Auswerteschaltung, die für die Drehgeschwindigkeiten der einzelnen Räder, Korrekturfaktoren ermittelt, welche eine Abweichung der jeweiligen Drehgeschwindigkeit von einer Bezugsgröße wiedergeben, die ferner in einer Lernphase Werte der einzelnen Korrekturfaktoren ermittelt sowie speichert und in einer Identifizierungsphase Abweichungen der Werte momentaner Korrekturfaktoren von den Werten der gespeicherter Korrekturfaktoren unter Berücksichtigung der jeweiligen Fahrsituation feststellt sowie bewertet, und die, wenn die Abweichungen der Werte der momentanen Korrekturfaktoren von den Werten der gespeicherten Korrekturfaktoren unter Berücksichtigung der jeweiligen Fahrsituation einen vorgegebenen Betrag überschreiten, Reifendruckverlust signalisiert.

Eine derartige Schaltungsanordnung ist aus der DE 43 37 443 A1 (P 7575) bekannt. In der Lernphase werden die Werte für die einzelnen Korrekturfaktoren ermittelt. Durch Korrelationen zwischen den Korrekturfaktoren für typische Fahrsituationen wird eine von der jeweiligen Fahrsituation abhängige Bandbreite oder Toleranzbreite fhr die Korrekturfaktoren bestimmt. Wird in der Identifizierungsphase ein Überschreiten der Toleranzbreite festgestellt, wird Reifendruckverlust signalisiert.

Mit dieser bekannten Anordnung wird Reifendruckverlust während der Fahrt festgestellt. Die Wirkungsweise der Anordnung beruht auf der Erkenntnis, daß der Luftdruck im Reifen den Abrollumfang des Reifens beeinflußt. Die Druckabhängigkeit ist jedoch sehr gering und daher schwer zu messen. Die in einem Fahrzeug, zum Beispiel für ein Blokkierschutz-Regelungs-system, ohnehin benötigten Raddrehzahlsensoren können nun dazu benutzt werden, über die Messung der Drehgeschwindigkeit und den Vergleich der Drehgeschwindigkeiten auf einen Druckverlust rückzuschließen. Da die Umfangsänderungen der Reifen selbst bei einem größeren Druckverlust kaum auflösbar sind, müssen die Störquellen, insbesondere die unterschiedlichen Reifendurchmesser infolge von Reifentoleranzen, Mischbereifung, unterschiedlicher Abnutzung oder als Folge der Montage eines Notrades, bei der Signalauswertung eliminiert werden. Dies geschieht bei der bekannten Anordnung zur Reifendrucküberwachung mit Hilfe einer Eichtaste, die der Fahrer oder das Werkstattpersonal zumindest nach jedem Reifenwechsel manuell betätigen muß. Anschließend stellt sich dann das beschriebene Drucküberwachungssystem in der Lernphase in Abhängigkeit von dem zurückgelegten Weg und unter Berücksichtigung der jeweiligen Fahrsituation auf die vorhandenen Unterschiede der Reifenabrollumfänge der einzelnen Räder ein.

Die Erfahrung hat gezeigt, daß nicht in jedem Fall davon auszugehen ist, daß der Fahrer zuverlässig die Eichtaste bedient. Der Erfindung liegt daher die Aufgabe zugrunde, den Fahrer von der Pflicht der zuverlässigen Bedienung der Eichtaste zu entlasten und einen möglichst einfachen, mit geringem Aufwand zu realisierenden Weg zum Starten der Lernphase in den erforderlichen Zeitabständen oder nach Eintritt bestimmter Ereignisse aufzufinden.

Es hat sich gezeigt, daß diese Aufgabe durch die im beigefügten Anspruch 1 beschriebene Anordnung gelöst werden kann, deren Besonderheit darin besteht, daß an der Radaufhängung jedes Rads ein Sensor oder Schalter vorgesehen ist, der beim Ausfedern des Rads bis zu einer Endposition oder über eine vorgegebene Position hinaus selbsttätig ein Rücksetzen von Speichern, die in der Lernphase ermittelte und gespeicherte Informationen enthalten, sowie ein erneutes Starten der Lernphase der Auswerteschaltung auslöst. Wenn Bedarf besteht, kann noch ein zusätzlicher Schalter zum manuellen Auslösen der Lernphase installiert werden.

Bei manchen Kraftfahrzeug-Regelungssystemen, z. B. bei Fahrwerkregelungssystemen, sind ohnehin in den Federbeinen Endschalter oder Wegsensoren montiert. Diese können natührlich auch als Bestandteil der erfindungsgemäßen Anordnung eingesetzt werden. In diesem Fall ist kein oder höchstens ein minimaler Mehraufwand im Vergleich zu der bekannten, zuvor geschilderten Reifendrucküberwachungsanordnung erforderlich, und es wird dennoch die gewünschte Entlastung des Fahrers von der Betätigung der Eichtaste erreicht.

Werden bei der erfindungsgemäßen Anordnung die in der Radaufhängung untergebrachten Schalter oder Sensoren während anderer Wartungsarbeiten durch das Hochheben des Fahrzeugs betätigt, ist dies kein Nachteil, sondern erhöht die Funktionssicherheit der Reifendrucküberwachung.

Weitere Details der Erfindung gehen aus der folgenden Beschreibung eines Ausführungsbeispiels der Erfindung anhand der beigefügten Abbildungen hervor.

Es zeigen
- Fig. 1: in schematisch vereinfachter Darstellungsweise die wesentlichen Komponenten einer Anordnung Reifendrucküberwachung nach der Erfindung und
zur
- Fig. 2: schematisch einen Schwingungsdämpfer mit einem Schalter für die Anordnung Fig. 1.

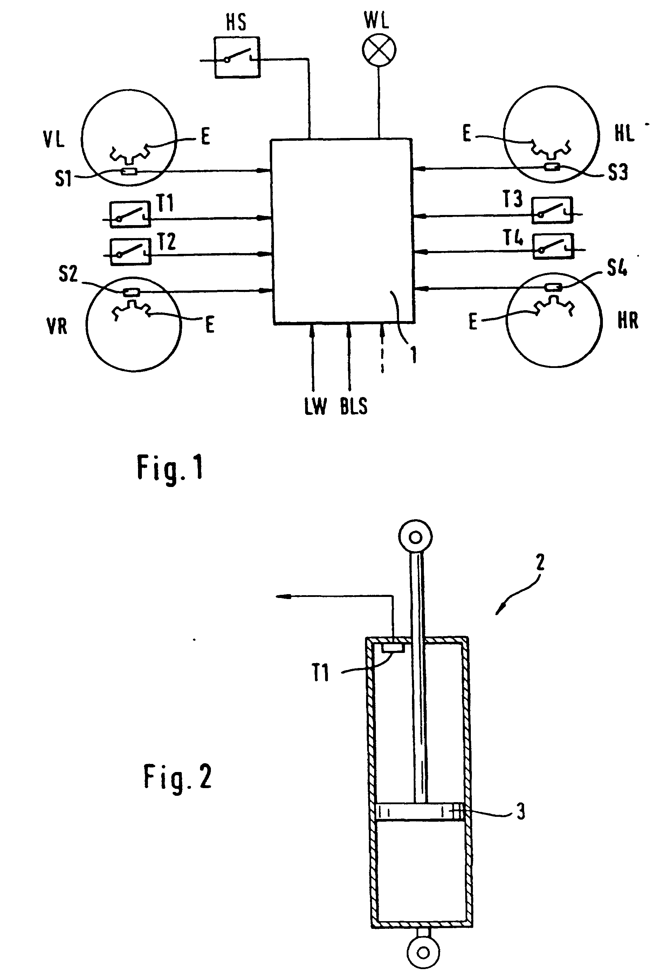

Fig. 1 veranschaulicht ein Kraftfahrzeug, dessen Räder VL, VR, HL, HR jeweils mit einem Rad-Drehzahlsensor S1 bis S4 ausgerüstet sind. Es handelt sich dabei um aktive oder passive Sensoren, die ortsfest am Fahrzeugrad angeordnet sind und die, wenn sich das Rad und mit diesem eine Zahnscheibe oder ein Encoder E dreht, ein Wechselsignal abgeben, das der Raddrehzahl entspricht. Solche Sensoren sind in zahlreichen Ausbildungsvarianten bekannt. Kraftfahrzeuge mit einem Antiblockiersystem (ABS), mit einer Antriebsschlupfregelung (ASR,TSC) oder einer Fahrstabilitätsregelung (FSR,ASMS) benötigen solche Sensoren zur Erzeugung von Eingangsgrößen für die Regelung.

Die Ausgangssignale der Sensoren S1 bis S4 werden einer Reifendrucküberwachungsschaltung 1, die den elektronischen Teil der erfindungsgemäßen Anordnung enthält, zugeleitet und in dieser Schaltung verarbeitet. Die Schaltung 1 kann festverdrahtete Schaltkreise und/oder programmgesteuerte Schaltungen enthalten; die Reifendruckhüerwachungsschaltung 1 kann auch Bestandteil des Reglers eines Kraftfahrzeug Regelungssystems sein.

In der Radaufhängung jedes Fahrzeugrades, nämlich sowohl der Vorderräder VL, VR und der Hinterräder HL, HR, ist jeweils ein Sensor oder Schalter T1 bis T4 untergebracht, der schließt bzw. ein Signal abgibt, wenn das Rad bis zu einer vorgegebenen Position oder bis zur Endposition ausfedert. Die Ausgangssignale dieser Schalter T1 bis T4 werden ebenfalls der gberwachungsschaltung 1 zugeführt.

Die Auswerteschaltung der Anordnung nach Fig. 1, nämlich die Reifendrucküberwachungsschaltung 1, verarbeitet, vergleicht und bewertet in bekannter Weise, z. B. nach dem in der vorgenannten DE 43 37 443 A1 beschriebenen Verfahren, die von den Raddrehzahlsensoren S1 bis S4 gelieferten Signale. Es werden radindividuelle Korrekturfaktoren gebildet, deren Werte in einer Lernphase Schritt für Schritt in Abhängigkeit von der zurückgelegten Fahrstrecke errechnet werden. Dabei wird die jeweilige Fahrsituation festgestellt und bei den Rechenschritten berücksichtigt. Beispielsweise ist ein direkter Vergleich der Radgeschwindigkeiten nur während einer Geradeausfahrt möglich; bei einer Kurvenfahrt weichen zwangssläufig die Geschwindigkeiten der Räder einer Achse voneinander ab.

Über einen Eingang LW wird die Schaltung 1 über den Lenkwinkel informiert; ein weiterer Pfeil BLS (Bremslicht-schalter) und ein gestrichelt angedeuteter Pfeil zeigen an, daß der Regler zweckmäßigerweise noch weitere Sensorsignale erhält und zur Beurteilung der jeweiligen Fahrsituation auswertet.

In einer Identifizierungsphase vergleicht die Schaltung 1 die gelernte Werte bzw. Korrekturfaktoren mit den aktuellen Werten und steuert eine Warnlampe WL an, wenn bei der Auswertung der aktuellen Werte der Raddrehzahlsensoren S1 bis S4 Reifendruckverlust erkannt wird.

Fig. 2 zeigt ein Beispiel fhr die Anbringung eines Positionsschalters T1, der hier in einem Schwingungsdämpfer 2 des Vorderrades VL untergebracht ist. Beim Ausfedern des Vorderrades, sobald ein symbolisch dargestellter Kolben 3 im Inneren des Schwingungsdämpfers 2 seine obere Endposition erreicht, wird der Schalter T1 mechanisch oder magnetisch betätigt, so daß er das Ausfedern dieses Rades der Auswerteschaltung 1 signalisiert. Das Signal eines der Endschalter oder Positionsschalter T1 bis T4 genügt bereits, um die Lernphase der Auswertschaltung 1 der erfindungsgemäßen Anordnung erneut zu starten und dadurch das System zu eichen. Eine Mitwirkung des Fahrers oder des Wartungspersonals ist dazu nicht erforderlich.

Anstelle der Positionsschalter T1 bis T4 kann auch jeder andere ohnehin im Fahrzeug vorhandene Schalter oder Sensor verwendet werden, der - beispielsweise zur Fahrwerksregelung - das Ausfedern eines Fahrzeugrades anzeigt.

Ein zusätzlicher Handschalter HS ist nur in Ausnahmefällen vorgesehen.

Eine Betätigung der Schalter T1 bis T4 geschieht zwangsläufig bei jedem Anheben des Fahrzeugs mit Hilfe einer Hebebühne und bei jedem Radwechsel. Ein unbeabsichtigtes Ausfedern des Rades in einer Ausnahmesituation und eine damit verbundene Betätigung eines der Schalter T1 bis T4 ist für die Funktion der Reifendrucküberwachung unbedenklich.

## Patentansprüche

1. Anordnung zur Überwachung des Reifendrucks in den an einem Kraftfahrzeug montierten Rädern (VL, VR, HL, HR) durch Messen, Vergleichen und Auswerten der Drehgeschwindigkeiten der einzelnen Räder (VL, VR, HL, HR), mit Raddrehzahlsensoren (S1 bis S4) und einer elektronischen Auswerteschaltung (1),
- die für die Drehgeschwindigkeiten der einzelnen Räder (VL, VR, HL, HR) Korrekturfaktoren ermittelt, welche eine Abweichung der jeweiligen Drehgeschwindigkeit von einer Bezugsgröße wiedergeben,
- die ferner in einer Lernphase Werte der einzelnen Korrekturfaktoren ermittelt sowie speichert und in einer Identifizierungsphase Abweichungen der Werte momentaner Korrekturfaktoren von den Werten der gespeicherter Korrekturfaktoren unter Berücksichtigung der jeweiligen Fahrsituation feststellt sowie bewertet, und
- die, wenn die Abweichungen der Werte der momentanen Korrekturfaktoren von den Werten der gespeicherten Korrekturfaktoren unter Berücksichtigung der jeweiligen Fahrsituation einen vorgegebenen Betrag überschreiten, Reifendruckverlust signalisiert, **dadurch gekennzeichnet, daß** an der Radaufhängung jedes Rads (VL, VR, HL, HR) ein Sensor oder Schalter (T1 bis T4) vorgesehen ist, der beim Ausfedern des Rads (VL, VR, HL, HR) bis zu einer Endposition oder über eine vorgegebene Position hinaus selbsttätig ein Rücksetzen von Speichern, die in der Lernphase ermittelte und gespeicherte Informationen enthalten, sowie ein erneutes Starten der Lernphase der Auswerteschaltung (1) auslöst.

2. Anordnung nach Anspruch 1, **dadurch gekennzeichnet, daß** ein zusätzlicher Schalter (HS) zum manuellen Rücksetzen der Speicher und Starten der Lernphase vorhanden ist.

## Claims

1. Device for monitoring the tire pressure in the wheels (VL, VR, HL, HR) mounted on an automotive vehicle by measuring, comparing, and evaluating the rotating speeds of the individual wheels (VL, VR, HL, HR), including wheel speed sensors (S1 to S4),
and an electronic evaluating circuit (1)
- which determines correction factors for the rotating speeds of the individual wheels (VL, VR, HL, HR) representative of a deviation of the respective rotating speed from a reference quantity,
- which further determines and stores values of the individual correction factors in a learning phase, and determines and evaluates deviations of the values of instantaneous correction factors from the values of the stored correction factors in consideration of the respective driving situation in an identification phase, and
- which signals loss of tire pressure as soon as the deviations of the values of the instantaneous correction factors from the values of the stored correction factors in consideration of the respective driving situation exceed a predetermined amount,
**characterized in that** a sensor or switch (T1 to T4) is provided on the wheel suspension of each wheel (VL, VR, HL, HR) which, upon rebound of the wheel (VL, VR, HL, HR) until a final position or beyond a predetermined position, automatically triggers a resetting of memories, which comprise data acquired and stored in the learning phase, and re-start of the learning phase of the evaluating circuit (1).

2. Device as claimed in claim 1,
**characterized in that** an additional switch (HS) for manually resetting the memories and starting the learning phase is provided.

## Revendications

1. Agencement de surveillance de la pression de pneumatique dans les roues (VL, VR, HL, HR) montées sur un véhicule automobile, par mesure, comparaison et analyse des vitesses de rotation des différentes roues (VL, VR, HL, HR), comprenant des capteurs de vitesse de rotation de roue (S1 à S4)
et un circuit d'analyse électronique (1),
- qui, pour les vitesses de rotation des différentes roues (VL, VR, HL, HR), détermine des facteurs de correction et qui reproduisent chacun un écart de la vitesse de rotation respective vis-à-vis d'une grandeur de référence,
- qui, en outre, dans une phase d'apprentissage, détermine et range en mémoire des valeurs des différents facteurs de correction et, dans une phase d'identification, détermine et analyse des écarts des valeurs de facteurs de correction momentanés vis-à-vis des valeurs des facteurs de correction rangés en mémoire, en tenant compte de la situation de conduite chaque fois considérée, et
- qui signale une perte de pression de pneumatique lorsque les écarts des valeurs des facteurs de correction momentanés vis-à-vis des valeurs des facteurs de correction rangés en mémoire dépassent, en tenant compte de la situation de conduite chaque fois considérée, une valeur préfixée,
**caractérisé en ce que**, sur la suspension de chaque roue (VL, VR, HL, HR), il est prévu un capteur ou interrupteur (T1 à T4) qui, lors du rebondissement de la roue (VL, VR, HL, HR) jusqu'à une position d'extrémité ou au-delà d'une position préfixée, déclenche automatiquement une remise à zéro de mémoires qui contiennent des informations déterminées et rangées en mémoire dans la phase d'apprentissage, ainsi qu'un nouveau démarrage de la phase d'apprentissage du circuit d'analyse (1).

2. Agencement suivant la revendication 1, **caractérisé en ce qu'**un interrupteur supplémentaire (HS) est prévu pour les remises à zéro des mémoires et démarrage de la phase d'apprentissage manuels.
